# EUROPEAN PATENT SPECIFICATION

(11) **EP 0 775 666 B1**
(45) Date of publication and mention of the grant of the patent: **19.02.2003**
(21) Application number: 96118235.9
(22) Date of filing: 14.11.1996
(51) Int. Cl.: B66F 9/10, B66F 9/14, B60P 3/12

(54) **Fork lift**
Gabelhubwagen
Elévateur à fourche

(30) Priority: 22.11.1995 IL 11610095
(43) Date of publication of application: 28.05.1997
(73) Proprietor: Ofakim Nerhavim Construction and Investments 1990 Ltd., Petach-Tikva (IL)
(72) Inventor: Parnes, Baruch, Tel Aviv (IL); Frankel, Nachum, Herzliya (IL)
(74) Representative: Schuhmann, Albrecht

(56) References cited:
- WO-A-82/01363
- FR-A- 1 309 825
- FR-A- 1 546 105
- FR-A- 2 305 385
- FR-A- 2 325 536
- FR-A- 2 503 644
- FR-A- 2 517 268
- FR-A- 2 592 644
- GB-A- 998 365

## Description

### Field of the Invention

The present invention concerns load trucks in general, and fork lift apparatus adapted to be mounted on conventional trucks and trailers in particular.

### Background of the Invention

Lift-trucks are widely used for loading, lifting, handling and carriage of heavy loads, such as large containers and cars. Typically, a designated lifting-vehicle comprises a built-in fork lift mechanism, which is preferred over elaborate crane lifts. Relatively light weights can be loaded in front or back of non-designated vehicles, without significantly endangering the stability of the lifting-vehicle. However, heavy loads must be loaded in proximity to the center of gravity in order to avoid turning over of the lifting-vehicle during the loading and unloading process, especially while the lifting-vehicle is in motion. Hence, conventional fork lift trucks comprise a designated truck having a fork lift mounted in front thereof, with a balancing counterweight mounted in the rear of the truck. In certain cases the mast of the fork lift is tilted in order to maintain the center of gravity.

Still, for some purposes, such as for towing cars and other vehicles, it is preferable to use a retractable fork lift mechanism which is mounted on the side (or rear) of the lifting-vehicle. In the latter cases, when the vehicle is in motion, the prongs of the fork overlappingly rest over the lifting-vehicle's frame, with or without cargo. During the process of loading and unloading, the prongs extend from the frame of the vehicle and lift the cargo - from underneath, in a combined downward-upward and traversing motions. The prongs are situated during this process anywhere between the ground and at some elevation above the chassis of the lifting-vehicle. To enable these combined motions, the chassis of the lifting-vehicle is designed as an open, Π-shaped rectangle, whereby the prongs reciprocate through the open side of the chassis.

In the latter cases, the open side of the chassis is usually located at the side of the lifting-vehicle - as required, for example, for loading and towing away cars which are unlawfully parked along the sides of a street. In such embodiments most of the weight of the lifting-vehicle itself is predisposed at the side of the lifting vehicle. This results from the accumulation of the necessary lifting equipment on the closed side of the Π-shaped chassis. Although such accumulation contributes to counter-balance the weight of the loaded cargo, it is disadvantageous when there is no cargo loaded or when the loaded cargo is relatively lightweight.

The above embodiment entails several further disadvantages: The requirement of a Π-shaped chassis necessary for the task of side loading, excludes the possibility of using conventional trucks and trailers having a "closed" chassis.

In addition, due to the unbalanced lack of a support beam in the open side of the Π-shaped chassis, the strength of the chassis is disproportionally reduced, even when the other support beams are reinforced, and especially when the chassis lacks a longitudinal support beam. Such weakened chassis is therefore suitable for transportation via regular roads and highways and the use of such lift trucks is usually restricted to special loading zones.

Moreover, the Π-shaped chassis poses a serious obstacle for the power transmission from the engine, mounted on one side of the loading vehicle, to the wheels which are mounted on the other side of the vehicle. Similar problems arise with regard to the brake system and the shock-absorbers and even the very engagement of the wheels to the chassis is problematic with the Π-shaped chassis.

In view of the above constructural restraints of such lift-trucks, which are designed for lifting a heavy load from their side, they comprise a hydraulic power source which serves both the motion of the vehicle on the ground and the operation of the lifting mechanism. Therefore, their speed on regular roads must be further restricted due to the hydraulic power source which is inferior to regular combustion engines.

Furthermore, some conventional fork lifts carry the load on the prongs while the lift-truck is in motion, a method which is unsafe and may damaging to the load.

Finally, the Π-shaped chassis is restricted to lifting loads from one side only of the lifting vehicle, a restriction which can be a major disadvantage. Such is the case, for instance, of a lifting truck used for towing-away cars which are unlawfully parked on both sides of a narrow street. When the lifting-truck is confined to drive in one direction only, the lifting of cars is possible only on one side of the road.

An attempt to provide lifting from both sides of a vehicle is disclosed in FR-A-1 546 105 and in FR-A-1.309.825, which is directed to a designated lifting vehicle for handling loads. The vehicle includes a fork lift assembly for lifting a load from either side of the vehicle. The fork lift assembly includes two vertical masts, fastened together by flat bars at their bottom and top. A pair of prongs are fastened to the bottom of the masts. The masts can reciprocate laterally on a pair of transverse guides, fastened to the vehicle. The masts can turn a maximum of 180 degrees, about a vertical axis at any point along the guides. The masts can reciprocate vertically, relative to the guides, at any point along the guides.

In order to load a cargo on the lifting vehicle, the masts are turned about the vertical axis, so that the prongs point toward the cargo. The cargo is then lifted by necessary movements of the masts along the guides, and vertically up and down movements relative to the guides. The masts are then turned about the vertical axis, in order to place the cargo on the deck of the lifting vehicle. The lifting mechanism is integral with a designated vehicle and requires the use of low plates for the chassis below the lifting mechanism. Such chassis substantially limits the capacity of the lifting vehicle to small loads and to restricted maneuverability, and limits the lowering of the prongs below the plates, rendering the lifting vehicle inappropriate for lifting cars or driving on a road.

It is therefore, an object of this invention, to provide a novel fork lift adapted to the loading of light and heavy loads on the side of the fork lift, which overcomes the above disadvantages.

In particular, an object of this invention is to provide a fork lift which can be mounted on a conventional chassis of a vehicle, such as conventional trucks or trailers, and which can be dismounted therefrom.

Another object of this invention is to provide a fork lift which will enable the lifting vehicle to move fast and safely in roads and highways, using a safe chassis and enabling the use of combustion engine for the drive of the vehicle.

A further particular object of this invention, is to provide a fork lift which can be used for lifting loads from either side of the lifting vehicle.

Yet, a further object of this invention is to provide a fork lift wherein the loaded cargo can be safely supported - and is not carried by the prongs of the fork lift while the vehicle is in motion.

These and other objectives are provided by the invention to be described below.

### Summary of the Invention

There is thus provided according to the present invention a novel fork lift mechanism for lifting a carried vehicle from either side of a carrying vehicle. The fork lift mechanism comprises retractably extendible front and rear transverse prongs for lifting a carried vehicle from either side of a carrying vehicle, and a mechanism for displacing the front and rear transverse prongs over and across the carrying vehicle. The fork lift mechanism is directed for mounting on a chassis of a non-designated carrying vehicle suitable for travel in regular roads.

The fork lift mechanism includes front and rear transverse girders, front and rear masts, a longitudinal beam, front and rear uprights, and front and rear transverse prongs. The front and rear transverse girders are adapted to be rigidly secured to the chassis of the carrying vehicle. Means are provided for reciprocating the front and rear masts along the front and rear transverse girders, respectively. The longitudinal beam is coupled to the front and rear masts. Means are provided for reciprocating the longitudinal beam in a downward-upward direction along the front and rear masts, respectively. The front and rear uprights extend downward from the longitudinal beam, and the front and rear transverse prongs are coupled to the bottoms of the front and rear uprights. The front and rear transverse prongs are retractably, and extendibly engaged to the bottoms of the front and rear uprights, respectively. The fork lift mechanism is furthermore characterized in that the front and rear transverse prongs are retractably extendible toward either side of the carrying vehicle, for lifting the carried vehicle from either side of the carrying vehicle.

In accordance with another aspect of the present invention, sliding platforms are retractably engaged with the chassis of the carrying vehicle, for placement of the carried vehicle on the carrying vehicle, during transport.

In accordance with a further aspect of the present invention, the front and rear transverse prongs are split or double prongs, and are adapted to lift the carried vehicle by the wheels thereof.

The longitudinal beam may include means for longitudinally moving the front and/or rear uprights along the longitudinal beam. The means for longitudinally moving the front and rear uprights along the longitudinal beam, typically includes hydraulic pistons. The longitudinal beam includes means for lowering or raising the front and rear uprights. The means for simultaneously reciprocating the front and rear masts along the front and rear transverse girders, may include sprocket wheels, wherein the sprocket wheels are mounted on each of the front and rear masts. Each of the sprocket wheels is turned against sprocket chains, which are mounted on the front and rear transverse girders, respectively. The sprocket wheels may be propelled by a hydraulic drive. The fork lift may also include a boom, to which the front and rear masts are coupled at their tops.

The means for reciprocating the longitudinal beam in a downward-upward motion, may include hydraulic pistons mounted on the boom, wherein the hydraulic pistons are coupled to chains, which are connected to the longitudinal beam through pulleys. The means for retractably extending the front and rear transverse prongs from the front and rear uprights, may include sprocket wheels. Each sprocket wheel can have a hydraulic drive, wherein each sprocket wheel is mounted on each of the front and rear uprights, and is turned against a mating toothed sprocket bar, which is mounted on each of the front and rear transverse prongs.

In accordance with another embodiment constructed and operative according to the present invention, there is provided a fork lift mechanism that includes front and rear heightened transverse girders, a longitudinal beam, front and rear uprights, and front and rear transverse prongs. The front and rear heightened transverse girders are adapted to be rigidly secured to the chassis of the carrying vehicle. The longitudinal beam is coupled to the front and rear heightened transverse girders. The front and rear uprights extend downward from the longitudinal beam. Means are provided for reciprocating the longitudinal beam along the front and rear heightened transverse girders. Means are provided for reciprocating the front and rear uprights in a longitudinal direction along the longitudinal beam. The front and rear transverse prongs are retractably, and extendibly engaged to the bottoms of the front and rear uprights, respectively.

The fork lift mechanism includes means for reciprocating the front and rear uprights in a downward-upward direction. The front and rear heightened transverse girders are combined with raising and lowering mechanisms for providing downward-upward motion of the longitudinal beam.

In accordance with a further constructed and operative according to the present invention, there is provided a fork lift mechanism for lifting the carried vehicle from either side of the carrying vehicle, that includes front and rear arches adapted to be rigidly secured to the chassis of the carrying vehicle. The fork lift mechanism includes a longitudinal beam coupled to the front and rear arches, and the front and rear transverse prongs are retractably engaged to the longitudinal beam. Means are provided for driving the longitudinal beam along the front and rear arches, for extending the front and rear transverse prongs from the longitudinal beam, and for moving the front and rear transverse prongs toward either side of the carrying vehicle. Furthermore, means are provided for retaining the front and rear transverse prongs in a horizontal configuration. The front and rear transverse prongs are retractably extendible from the longitudinal beam, and the front and rear transverse prongs are movable toward either side of the carrying vehicle, for lifting the carried vehicle from either side of the carrying vehicle.

Optionally, The fork lift mechanism further includes a set of 4 extendible strut poles rigidly secured to the chassis of the carrying vehicle, for providing additional security against turning over of the carrying vehicle, during the process of loading and unloading.

Further features and advantages of the invention will be apparent from the description below, given by way of example only.

### Brief Description of the Invention

The present invention will be further understood and appreciated from the following detailed description, taken in conjunction with the following enclosed drawings in which like numerals designate correspondingly analogous elements or sections throughout, and in which:
Figure 1 is a perspective overall view of a fork lift constructed and operative in accordance with one embodiment of the invention;
Figure 2 is a cross-sectional side view of the embodiment of Figure 1;
Figures 3a-3b are cross-sectional top views of the embodiment of Figure 1;
Figures 4 and 5 are cross-sectional front views of the embodiment of Figure 1;
Figures 6a - 6d are examples of optionally swinging prongs constructed and operative in accordance with the invention;
In Figures 6e-6f, there are shown examples of split prongs constructed and operative in accordance with the invention;
Figure 7a is a perspective overall view of a fork lift constructed and operative in accordance with another embodiment of the invention;
Figures 7b-7c are perspective partial enlarged views of a segment of the embodiment of Figure 7a;
Figure 8 is a perspective overall view of a lift fork constructed and operative in accordance with a further embodiment of the invention;
Figures 9a - 9b are demonstrations of means for retaining horizontal configuration of the prongs in the embodiment of Figure 8; and
Figure 9c is a schematic presentation of the rails of the conserving means shown in Figure 9b.

### Detailed Description of the Invention

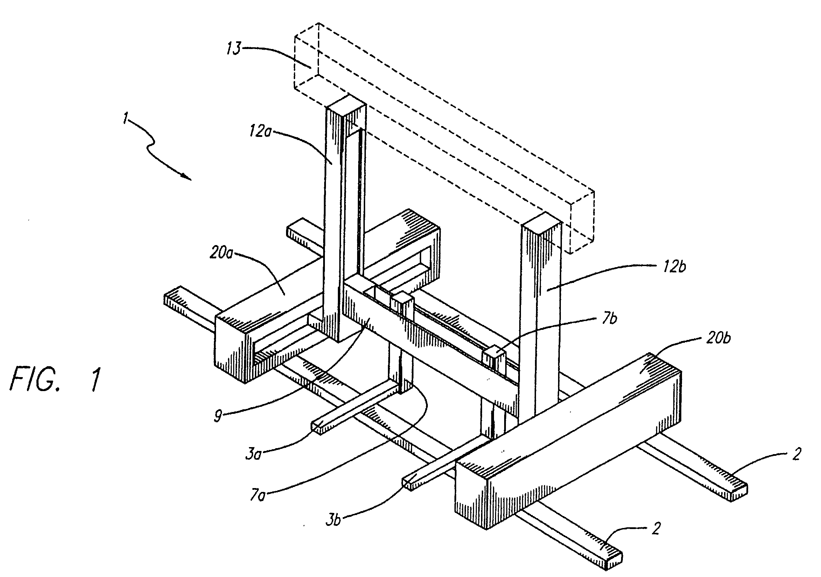

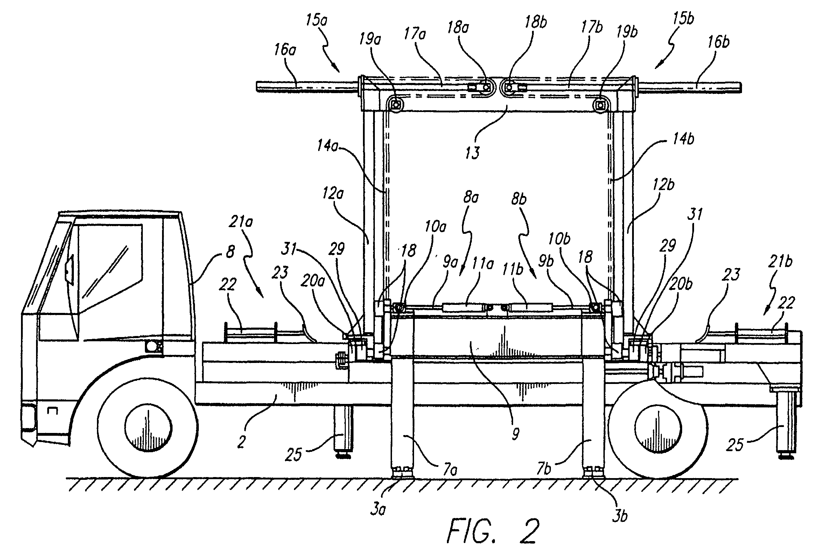

With reference to Fig. 1, there is shown a fork lift mechanism 1, for lifting a carried vehicle (not shown) from either side of a carrying vehicle (as in Fig. 2). The carrying vehicle is a non-designated vehicle, suitable for travelling in regular roads. Fork lift mechanism 1 is directed for mounting on a chassis 2 of the carrying vehicle. Fork lift mechanism 1 includes two prongs - a front transverse prong 3a and a rear transverse prong 3b. Front and rear transverse prongs 3a and 3b engage the load to be lifted (not shown) from the ground, from underneath, when positioned as in Figure 2. Front and rear transverse prongs 3a and 3b are supported and linearly, retractably, and extendibly engaged to bottoms of a front and a rear uprights 7a and 7b, respectively. Front and rear transverse prongs 3a and 3b can be maneuvered to extend to the position suitable for lifting loads from one side of the fork lift mechanism (or of the loading vehicle - such as vehicle 8 in Figure 2) or from the other side thereof, and to assume any position in between above the vehicle's chassis 2, in Figures 1 and 2. Usually, the maneuvering of front and rear transverse prongs 3a and 3b is simultaneous and symmetrical, to ensure the necessary horizontal support of the lifted loads and to avoid dangerous collision with chassis 2. However, for special tasks, each of front and rear transverse prongs 3a or 3b can be maneuvered separately, as required for instance for lifting of loads from sloping surfaces.

Front and rear uprights 7a and 7b extend from a longitudinal beam 9 and can be displaced, together or separately, along longitudinal beam 9 in order to adapt to the size of the load to be lifted. Equi-distancing of front and rear uprights 7a and 7b from the edges of longitudinal beam 9, respectively, although not compulsory, will provide symmetrical distribution of the lifted weight along longitudinal beam 9. The moving of front and rear uprights 7a and 7b along longitudinal beam 9 may be carried out by two hydraulic pistons 8a and 8b as in the configuration shown for example in Figure 2. Plungers 9a and 9b are coupled to front and rear uprights 7a and 7b at joints 10a and 10b, correspondingly. Meshing piston housings 11a and 11b are rigidly secured to longitudinal beam 9. As plungers 9a and 9b reciprocate through piston housings 11a and 11b, front and rear uprights 7a and 7b move along longitudinal beam 9.

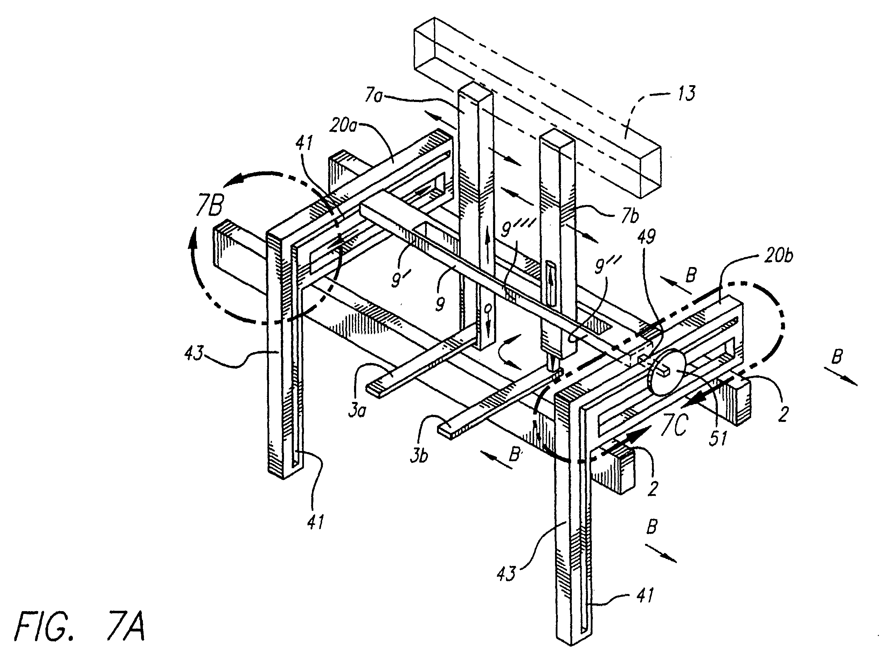

Longitudinal beam 9 is mounted to front and rear masts 12a and 12b. Longitudinal beam 9 can raise or descent, with the aid of a suitable mechanism in a downward-upward motion along the front and rear masts and thus provide the lifting of the loads. Alternatively, the required lifting can be provided by a vertical motion of front and rear uprights 7a and 7b with regard to said longitudinal beam 9 such as generally suggested in an alternate embodiment of the fork lift mechanism in Figure 7a.

Preferably, front and rear masts 12a and 12b are coupled at their tops to a boom 13, providing extra strength and stability to the whole structure of the fork lift mechanism. In addition, boom 13 can be used as a stable support for a suitable lifting mechanism of longitudinal beam 9. Such mechanism can be provided as shown in Figure 2. Lifting chains 14a and 14b are coupled at one end to longitudinal beam 9 and at the other end to hydraulic pistons 15a and 15b, which are mounted on boom 13. Hydraulic pistons 15a and 15b comprise corresponding piston housings 16a and 16b - rigidly secured to boom 13, and further comprise plungers 17a and 17b having pulleys 18a and 18b mounted at their edges. Chains 14a and 14b are connected to boom 13 in proximity of housings 16a and 16b and are correspondingly curled around pulleys 18a and 18b and pulleys 19a and 19b that are mounted on boom 13 in proximity to front and rear masts 12a and 12b. As apparent from Figure 2, when plungers 17a and 17b move a distance X, longitudinal beam 9 is lifted or lowered a distance of 2X (twofold leverage). It is understood that a threefold or quadrafold pulling length can be analogously arranged.

Front and rear masts 12a and 12b are coupled at their bottom to front and rear transverse girders 20a and 20b, correspondingly. Guiding wheels 18 are mounted on longitudinal beam 9 which roll in meshing rails along front and rear masts 12a and 12b, as shown in Figures 1, 3a, 3b and 5. Wheels 18 allow smooth raising and lowering of longitudinal beam 9 along front and rear masts 12a and 12b.

Front and rear transverse girders 20a and 20b are adapted to be coupled firmly to chassis 2 and comprise means for simultaneously reciprocating front and rear masts 12a and 12b along front and rear transverse girders 20a and 20b and thus provide the necessary transverse movement of the lifting mechanism towards both sides of the fork lift mechanism.

As shown in Figure 2, the above structure is suitable for lifting loads from either side of a non-designated truck such as vehicle 8. Vehicle 8 may be substituted, for example, by a trailer or any other suitable cart or vehicle. Such trailer or cart can be easily designed (unlike conventional trucks for general purposes) to adapt to special needs, such as low chassis - suitable for city-car-towing or for loading in a warehouse, for saving lifting time and energy. For lifting of several loads, a series of fork lift mechanisms may be installed either on a long vehicle or on a series of trailers, and even train carts, as suitable. In particular, two fork lift mechanisms installed on a carrying truck in a row may be useful for lifting a carried vehicle by its wheels, as is further elaborated below.

In the position shown in Figure 2, the fork lift mechanism is ready to initiate a lifting and loading phase or complete an unloading phase for a load located on the left side of vehicle 8. Such position would be compatible to locations of front and rear masts 12a and 12b in the leftmost (the nearest) parts of front and rear girders 20a and 20b as better seen in Figure 1.

In Figure 1, front and rear transverse prongs 3a and 3b of fork lift mechanism 1 are resting upon chassis 2 - a situation suitable for fork lift mechanism 1 when not in use. When the load is already loaded over the vehicle, the location of front and rear masts 12a and 12b would be in the rightmost or leftmost (the farthest or the nearest) side of front and rear transverse girders 20a and 20b. During the process of loading, when the load is already lifted, longitudinal beam 9 is held at a sufficiently high position which ensures free passage of the load over the vehicle chassis 2, and is slightly lowered in order to place the load on the floor or deck of vehicle 8 and enable the release of the lifting mechanism from the load.

The motions of all the operative parts of the fork lift mechanism - such as the motions of front and rear transverse prongs 3a and 3b, front and rear uprights 7a and 7b, longitudinal beam 9 and front and rear masts 12a and 12b, may be combined or simultaneous, and any suitable controlling device may be associated with the relevant driving means of these parts for their manual or computerized motion control.

If the load is a car, front and rear transverse prongs 3a and 3b may be spread out until they engage the wheels of the car, in order to lock the wheels of the car. Alternate locking devices, such as devices 21a and 21b in Figure 2 can be mounted in the front or the rear part of vehicle 8 to prevent the movement of the load during its transportation. In the example of Figure 2, devices 21a and 21b comprise hydraulic pistons 22 which push or pull lockers 23 toward the edges of the loaded car or its wheels.

Optionally, a set of 4 telescopic extendible strut poles 25, as shown in Figure 2, is rigidly secured to chassis 2 for providing additional security against turning over of the loading vehicle 8 during the process of loading and unloading.

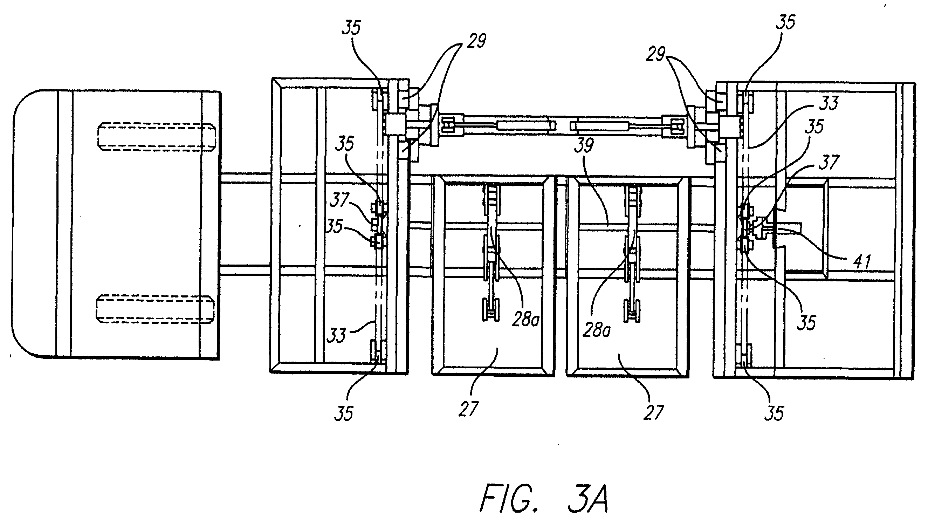

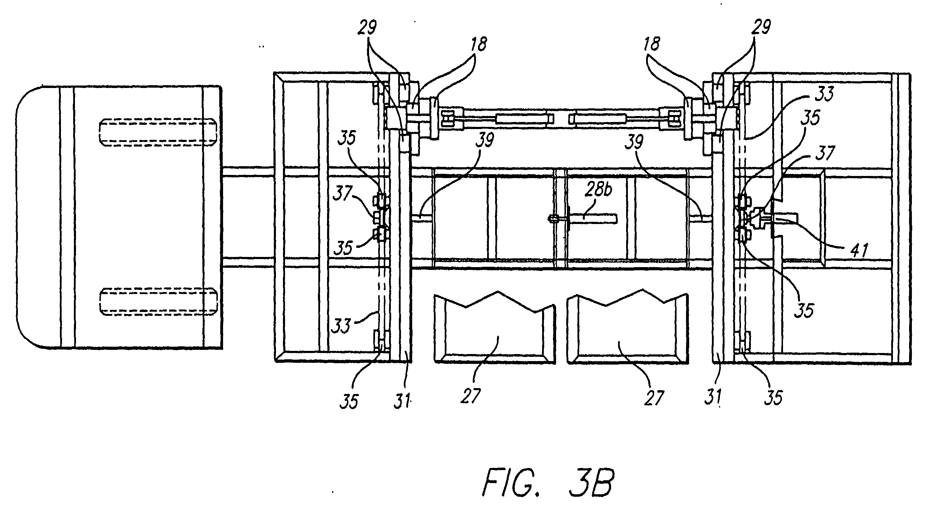

Optionally, the deck floor of vehicle 8 can be of a retractable or collapsible kind, such as with sliding platforms 27 in Figures 3a and 3b, or vertical plates (not shown) which can be turned to a horizontal configuration. A collapsible or maneuverable deck floor is required when a permanent floor is not wide enough to place the load on vehicle 8, during transport. In the example shown in Figures 3a and 3b, platforms 27 are maneuvered transversally by pistons 28a and longitudinally by pistons such as 28b.

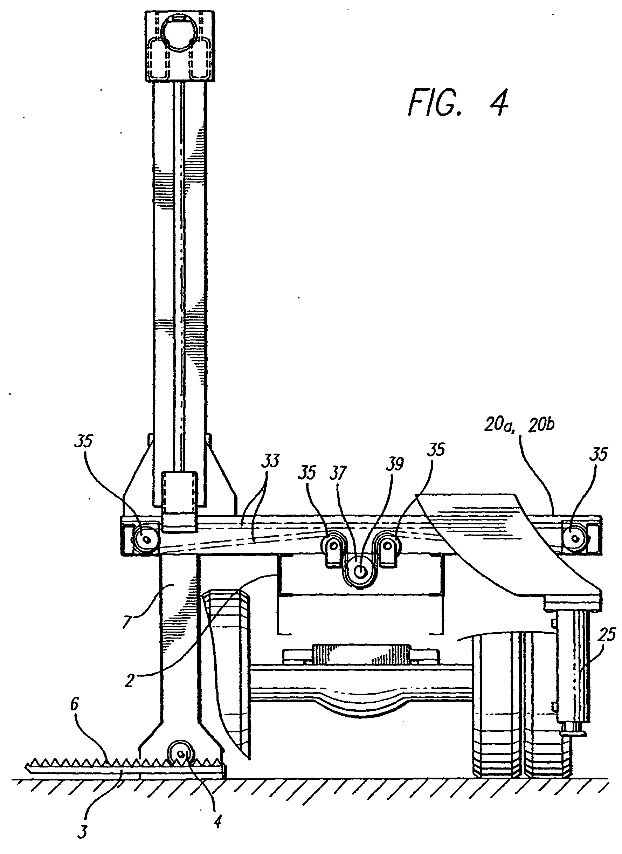

The mechanism for reciprocating front and rear masts 12a and 12b along front and rear transverse girders 20a and 20b is shown in Figures 1, 2, 3a, 3b and 4. Each of front and rear masts 12a and 12b comprises wheels 29 which roll in meshing rails 31 along front and rear transverse girders 20a and 20b, as best seen in Figure 3b. Wheels 29 ensure a smooth slide of front and rear masts 12a and 12b along front and rear transverse girders 20a and 20b. Front and rear masts 12a and 12b are firmly connected to sprocket chains 33 as best seen in Figures 3a, 3b and 4. Sprocket chains 33 are tightly stretched by guiding wheels 35 - which are mounted on front and rear transverse girders 20a and 20b, and sprocket wheels 37 which serve as the drivers of sprocket chains 33. Sprocket wheels 37 are coupled to shaft 39 - which is propelled by a drive such as a hydraulic drive 41 in Figures 3a and 3b. The interconnection of sprocket wheels 37 to a common shaft 39 guarantees the simultaneously parallel motions of front and rear masts 12a and 12b.

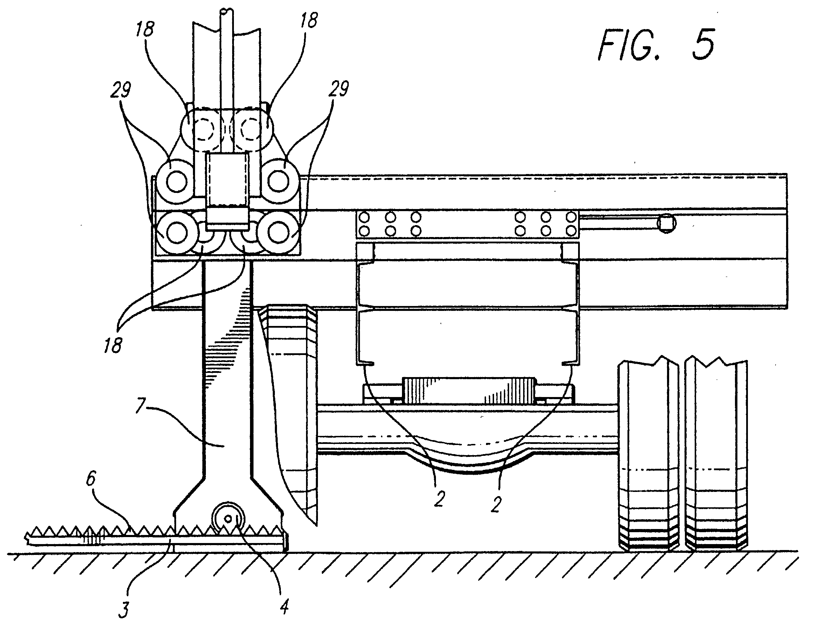

Front and rear transverse prongs 3a and 3b can either simultaneously or separately extend from front and rear uprights 7a and 7b, by a driving mechanism as shown in Figures 4 and 5: prong 3 is reciprocated by a sprocket wheel 4, which is preferably actuated by a hydraulic drive, and which is mounted on upright 7. Sprocket wheel 4 revolves against mating toothed sprocket bar 6 which is mounted on prong 3. An alternate driving mechanism may include chains (not shown).

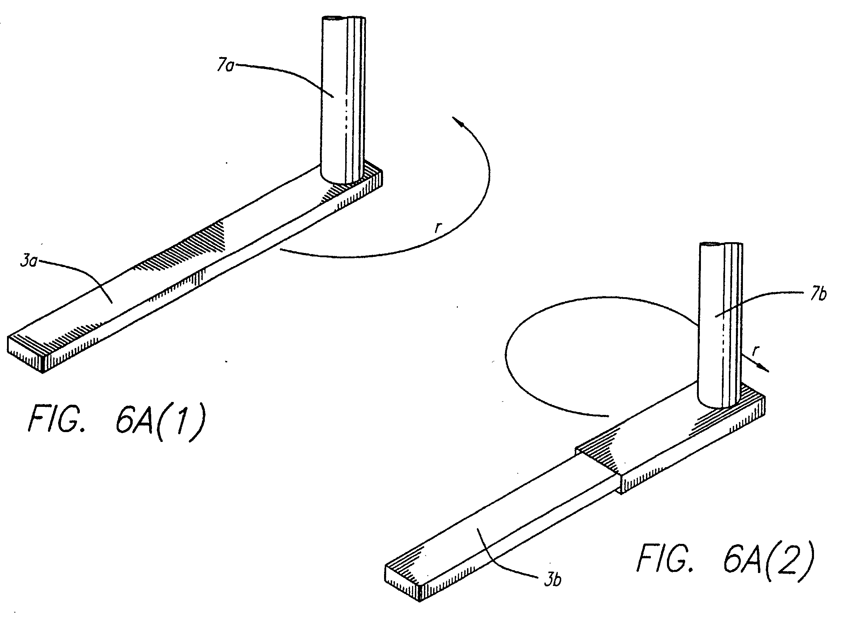

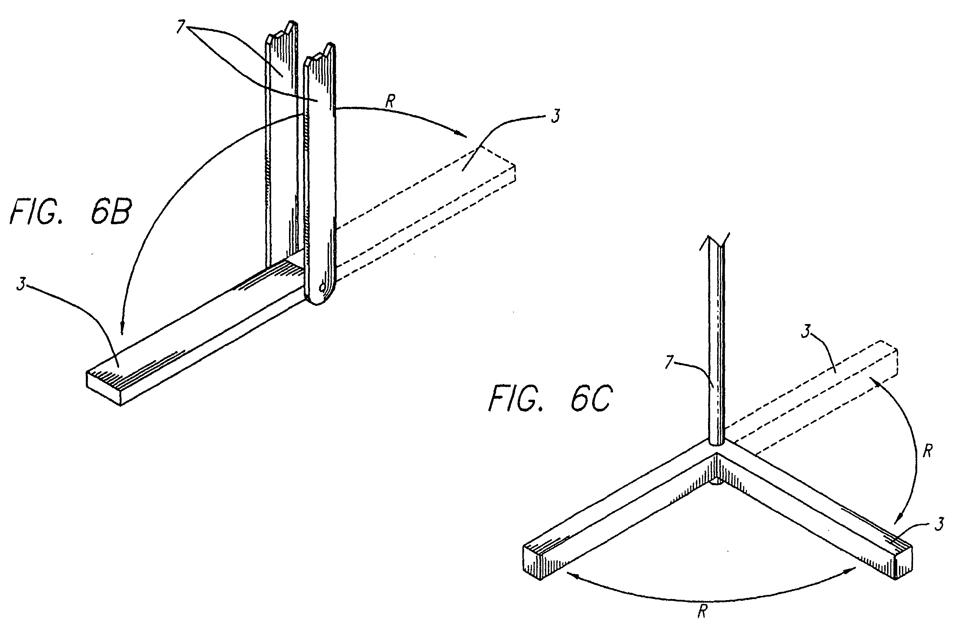

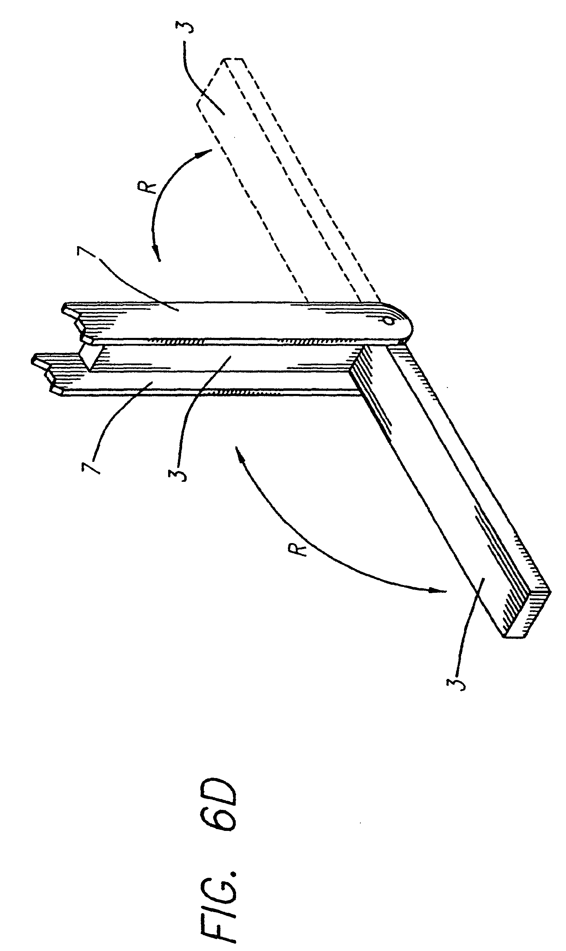

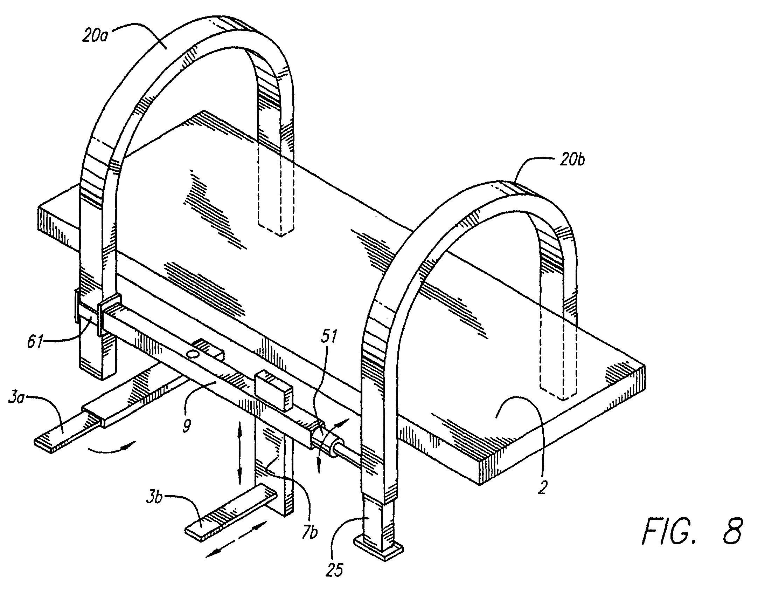

Alternate pivotal prongs 3 are shown in Figures 6a and 6b. Simple bar shaped prongs 3 can pivot 180° in direction 'r' - either horizontally, as in Figure 6a, or vertically, as in Figure 6b. Further optionally, telescopic prongs as prong 3b in Figure 6a and prong 3a in Figure 8 may be used. Alternate pivotal prongs that are L-shaped and which can pivot 90°, horizontally or vertically, are demonstrated in Figures 6c and 6d.

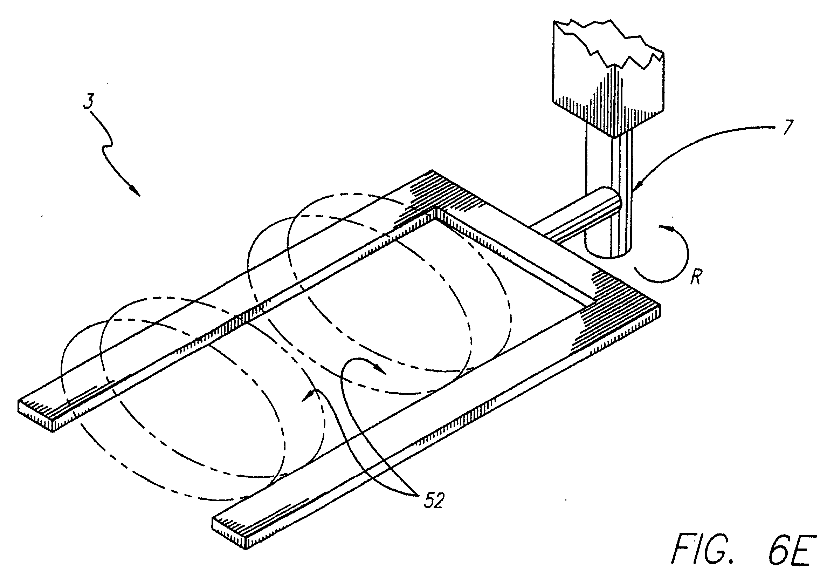

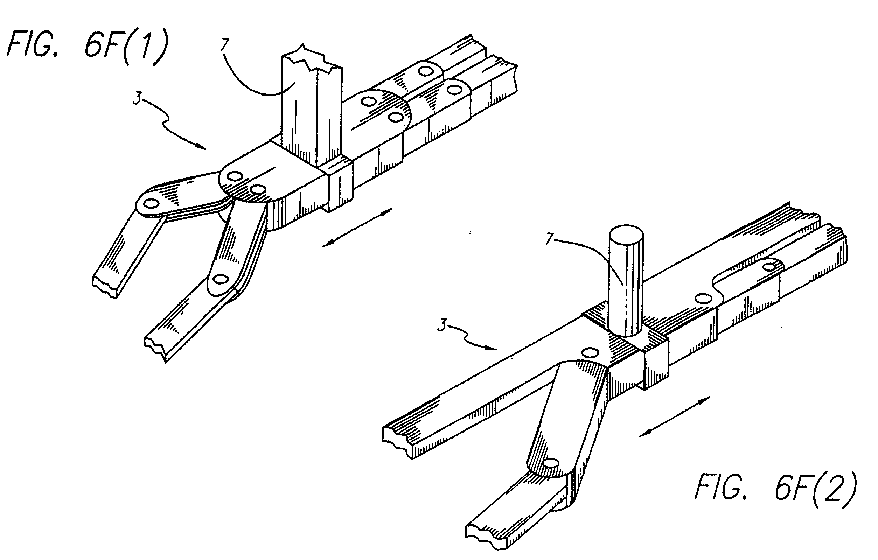

Prong 3 may comprise a split prong, as shown in Figure 6e, which is useful for lifting and loading cars, whereby prong 3 is adapted to lift two car wheels 52 and another similar prong (not shown) would similarly lift the other two wheels of a car. Such prongs can provide the lock necessary to maintain the loaded car in a stable state during transportation. Split prong 3, for instance, may be pivotally mounted to upright 7, as in Figure 6e, for enabling its extension by its pivoting toward the other side of a lifting truck. Alternately, split prong 3 may be reciprocated to both sides of the truck, in a way analogous to the one shown in Figures 4 and 5, and comprise articulated splitting mechanism, as in the examples shown in Figure 6f. Alternatively, four prongs may be mounted in a row - a front pair of prong for lifting one pair (front or rear) of wheels of the carried vehicle and a rear pair of prongs for lifting the other pair (rear or front) of wheels of the carried vehicle, in analogy to the embodiment shown in Fig. 6e. Further alternatively, two fork lift mechanisms - a first mechanism and a second mechanism - may be mounted in a row on a single carrying vehicle, and operated simultaneously for lifting the carried car by its tires. The first fork lift mechanism, with its single pair of prongs, would lift one pair of wheels (rear or front) of the carried vehicle, and the second fork lift mechanism would simultaneously lift the other pair (rear or front) of wheels of the carried vehicle, in analogy to the embodiment shown in Fig. 6e.

Notably, although the invention is primarily designed for lifting on the side of the carrying vehicle, it is possible to install the lifting mechanism for rear or frontal lifting.

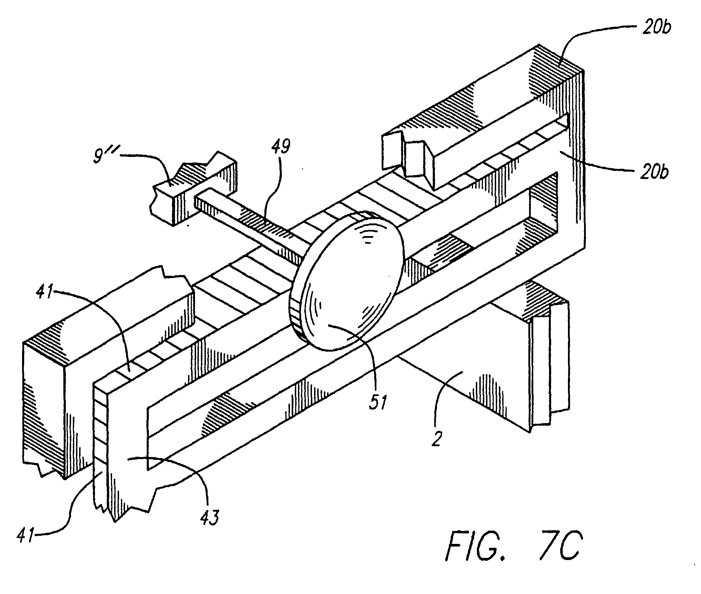

Referring now to Figure 7a, there is shown an alternate embodiment of the fork lift mechanism. Front and rear heightened transverse girders 20a and 20b are firmly secured to chassis 2. Longitudinal beam 9 reciprocates along front and rear heightened transverse girders 20a and 20b as in Figure 1. Extendible or pivotal front and rear transverse prongs 3a and 3b are coupled to front and rear uprights 7a and 7b as in any of Figures 1 or 6a to 6d. The lifting of front and rear transverse prongs 3a and 3b may be provided by vertical reciprocation of front and rear uprights 7a and 7b upon longitudinal beam 9, by using any suitable mechanism, such as analogous to the piston-propelled chains 14a and 14b in Figures 1 and 2, and by using optional boom 13 shown in perforated lines in Figures 7a and 7c. Alternate lifting devices may use toothed wheels and meshing toothed bars analogous to sprocket 4 and bar 6 in Figures 4 and 5.

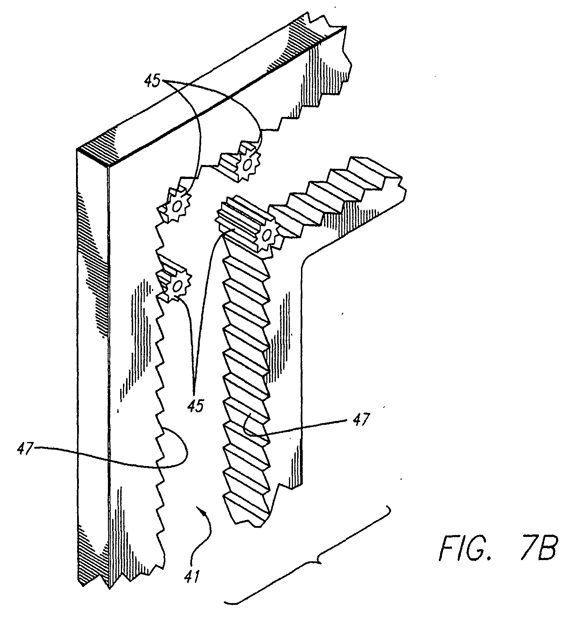

A further alternate lifting device may be provided by guiding longitudinal beam 9 through rails such as rails 41 in Figure 7a. Front and rear heightened transverse girders 20a and 20b may comprise extended legs 43 through which longitudinal beam 9 reciprocates vertically. This can possibly be carried out by means of toothed wheels 45, shown in Figure 7b, which are turned against mating toothed inner walls 47 of rail 41. Wheels 45 are mounted on the edge of longitudinal beam 9 and their coordinated revolving will reciprocate longitudinal beam 9 either vertically or horizontally through rails 41.

The support of longitudinal beam 9 by front and rear heightened transverse girders 20a and 20b can be re-enforced, such as by branch 49 in Figures 7a and 7c, which is inserted across rails 41 and may be further enhanced with the aid of an enclosing member 51. If the support of longitudinal beam 9 by front and rear heightened transverse girders 20a and 20b is satisfactory and boom 13 is not employed, longitudinal beam 9 may be separated into two beams 9' and 9", if the middle chunk 9"' is taken off. In such configuration the distancing of front and rear transverse prongs 3a and 3b may be provided by longitudinal motion of any of the front and rear heightened transverse girders 20a and 20b along chassis 2, using suitable reciprocating means.

Another alternate fork lift mechanism is demonstrated in Figure 8. Front and rear arches 20a and 20b are rigidly secured to chassis 2. Longitudinal beam 9 is coupled to front and rear arches 20a and 20b and can be maneuvered along front and rear arches 20a and 20b, using any suitable driving means such as toothed wheels and bars analogous to those shown in Figure 7a. The arcuate track along front and rear arches 20a and 20b, combines both the required lifting and the transverse carriage of the loads. Front and rear transverse prongs 3a and 3b are extendible or pivotal and are coupled to longitudinal beam 9 in any suitable manner such shown in the previous examples. Front and rear arches 20a and 20b may comprises telescopic extensions such as member 25 in order to allow the lowering of front and rear transverse prongs 3a and 3b to the ground. Such member can also function as a strut pole similar to strut poles 25 in Figure 8. Alternatively, intermediate upright such as 7b in Figure 8 can provide the necessary lowering of the prongs.

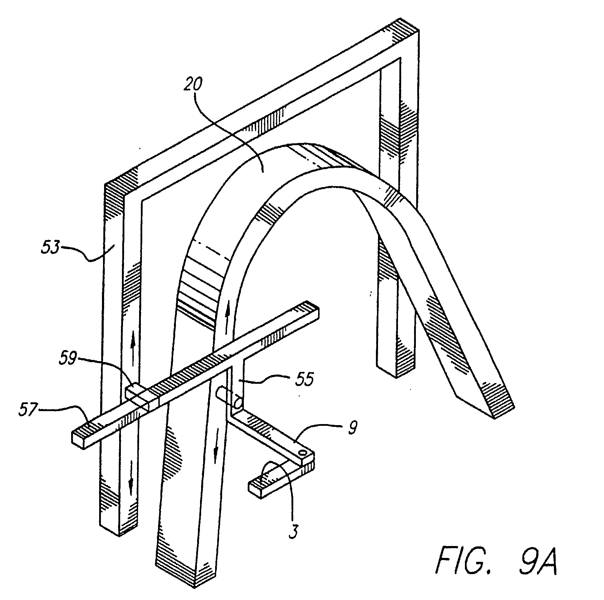

In order to ensure the permanently horizontal position of front and rear transverse prongs 3a and 3b which is essential for the appropriate lifting, stabilizing or balancing means need to be applied. Such stabilizing means may comprise pivotal joints such as joint 51 having a suitable gear and which is controlled by a predetermined program in correlation to the position along front and rear arches 20a and 20b, or in real time by gyroscopic, manual or computerized controller. Alternate stabilizing means can be provided by coupling longitudinal beam 9 with rectilinear guide such as mechanical guide 53 in Figure 9a. T-shaped member 55 is rigidly coupled to longitudinal beam 9 and comprises a horizontal rail (not shown) along its upper section 57. Reciprocatable bridging bar 59 is connecting section 57 to guide 53. Bar 59 can slide along section 57 which remains perpetually horizontal. Guide 53 comprises a rail compatible to sliding of bar 59 all along thereof. The confinement of bar 59 to horizontal movement at its connection to section 57 and to vertical movement at its connection to guide 53 ensures the permanently horizontal position of section 57 and prong 3.

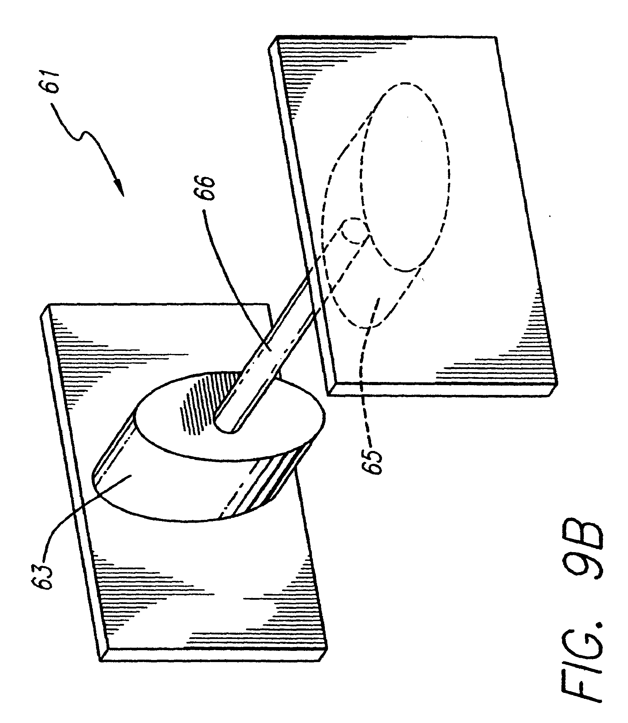

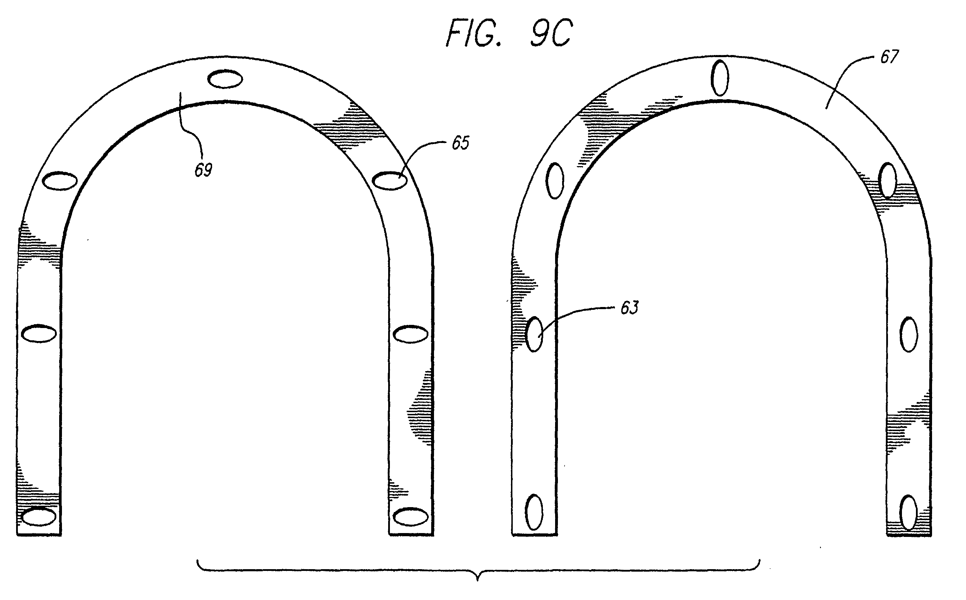

Alternate stabilizing means 61 are shown in Figure 8 and are presented in more detail in Figures 9b and 9c. Longitudinal beam 9 is rigidly coupled to frame 61. Frame 61 encompasses front arch 20a and comprises elliptical internal projections 63 and 65 which are rigidly coupled with rod 66. Projection 63 is a vertical ellipse and projection 65 is a horizontal ellipse. Compatible guiding grooves 67 and 69 shown in Figure 9c are mounted on the sides of front arch 20a and guide projections 63 and 65 correspondingly. Groove 67 is designed to allow free movement of vertical projection 63 therethrough, but its lower sections are gradually narrowed - to constrain the rotation of projection 63. Similarly, groove 69 is designed to allow free movement of horizontal projection 65 therethrough, but its upper section is gradually narrowed - to constrain the rotation of projection 65. The combined constraints imposed on the rotations of projections 63 and 65, guarantees the conservation of the horizontal position of longitudinal beam 9, and hence - of front and rear transverse prongs 3a and 3b.

It will be appreciated by those skilled in the art that the invention is not limited to what has been shown and described hereinabove by way of example only. Rather, the invention is limited solely by the claims which follow.

## Claims

1. A fork lift mechanism for lifting a carried vehicle from either side of a carrying vehicle, wherein
the fork lift mechanism is directed for mounting on a chassis (2) of a non-designated, suitable for travel in regular roads, carrying vehicle;
and wherein the fork lift mechanism comprises
a front transverse prong (3a) and a rear transverse prong (3b), retractably extendible toward either side of said carrying vehicle;
a front transverse girder (20a) and a rear transverse girder (20b) adapted to be rigidly secured to said chassis (2);
a front mast (12a) and a rear mast (12b);
means for reciprocating said front and rear masts (12a, 12b) along said front and rear transverse girders (20a, 20b), respectively;
a longitudinal beam (9) coupled to said front and rear masts (12a, 12b);
means for reciprocating said longitudinal beam (9) in a downward-upward direction along said front and rear masts (12a, 12b), respectively;
a front upright (7a) and a rear upright (7b) extending downward from said longitudinal beam (9), wherein said front and rear transverse prongs (3a, 3b) are coupled to the bottoms of said front and rear uprights (7a, 7b), and are retractably extendible therefrom toward either side of said carrying vehicle.

2. A fork lift mechanism as in claim 1, further comprising sliding platforms (27) retractably engaged with said chassis (2), for placement of said carried vehicle thereon, during transport.

3. A fork lift mechanism as in claim 1, wherein said front and rear transverse prongs (3a, 3b) are split prongs or double prongs adapted to lift said carried vehicle by its wheels.

4. A fork lift mechanism as in any of the claims 1 to 3, wherein said longitudinal beam (9) comprises means for longitudinally moving said front and rear uprights there along.

5. A fork lift mechanism as in claim 4, wherein said means for longitudinally moving said front and rear uprights (7a, 7b) comprises hydraulic pistons.

6. A fork lift mechanism as in any of claims 1 to 5, wherein said longitudinal beam (9) comprises means for lowering or raising said front and rear uprights (7a, 7b).

7. A fork lift mechanism as in any of claims 1 to 6, wherein said means for simultaneously reciprocating said front and rear masts (12a, 12b) along said front and rear transverse girders (20a, 20b), comprise sprocket wheels (29), wherein said sprocket wheels are mounted on each of said front and rear masts, and each of said sprocket wheels is turned against sprocket chains (33), which are mounted on said front and rear transverse girders, respectively.

8. A fork lift mechanism as in claim 7, wherein said sprocket wheels are propelled by a hydraulic drive (41).

9. A fork lift mechanism as in any of claims 1 to 8 comprising a boom (13), to which said front and rear masts (12a, 12b) are coupled at their tops.

10. A fork lift mechanism as in claim 9, wherein said means for reciprocating said longitudinal beam (9) in a downward-upward motion, comprise hydraulic piston(s) (15a, 15b) mounted on said boom, wherein said hydraulic piston(s) are coupled to chains (14a, 14b), which are connected to said longitudinal beam through pulleys.

11. A fork lift mechanism as in any of claims 1 to 10, wherein means for retractably extending said front and rear transverse prongs (3a, 3b) from said front and rear uprights (7a, 7b), comprise sprocket wheels (4), each having a hydraulic drive, and wherein each of said sprocket wheels is mounted on each of said front and rear uprights (7a, 7b), and is turned against a mating toothed sprocket bar (6), which is mounted on each of said front and rear transverse prongs (3a, 3b).

12. A fork lift mechanism for lifting a carried vehicle from either side of a carrying vehicle, wherein
the fork lift mechanism is directed for mounting on a chassis (2) of a non-designated, suitable for travel in regular roads, carrying vehicle; and wherein
the fork lift mechanism comprises:
a front transverse prong (3a) and a rear transverse prong (3b), retractably extendible toward either side of said carrying vehicle;
a front heightened transverse girder (20a) and a rear heightened transverse girder (20b) adapted to be rigidly secured to said chassis (2);
a longitudinal beam (9) coupled to said front and rear heightened transverse girders (20a, 20b);
a front upright (7a) and a rear upright (7b) extending downward from said longitudinal beam (9);
means for reciprocating said longitudinal beam (9) along said front and rear heightened transverse girders (20a, 20b);
means for reciprocating said front and rear uprights (7a, 7b) in a longitudinal direction along said longitudinal beam (9), wherein said front and rear transverse prongs (3a, 3b) are coupled to the bottoms of said front and rear uprights (7a, 7b), and are retractably extendible therefrom toward either side of said carrying vehicle,
the fork lift mechanism further comprising means for reciprocating said front and rear uprights (7a, 7b) in a downward-upward direction.

13. A fork lift mechanism as in claim 12, wherein said front and rear heightened transverse girders (20a, 20b) are combined with raising and lowering mechanisms for providing downward-upward motion of said longitudinal beam (9).

14. A fork lift mechanism for lifting a load from either side of a non-designated carrying vehicle, wherein the fork lift mechanism comprises:
a front arch (20a) and a rear arch (20a) adapted to be rigidly secured to a chassis (2) of said carrying vehicle;
a longitudinal beam (9) coupled to said front and rear arches (20a, 20b);
a front transverse prong (3a) and a rear transverse prong (3b) retractably engaged to said longitudinal beam;
means for driving said longitudinal beam (9) along said front and rear arches (20a, 20b);
means for extending said front and rear transverse prongs (3a, 3b) from said longitudinal beam (9), toward either side of said carrying vehicle; and
means for retaining said front and rear transverse prongs (3a, 3b) in a horizontal configuration;
wherein, said front and rear transverse prongs (3a, 3b) are retractably extendible from said longitudinal beam (9); and
said front and rear transverse prongs (3a, 3b) are movable toward either side of said carrying vehicle, for lifting the load from either side thereof.

15. A series of at least two fork lift mechanisms as in any of claims 1 to 14, mounted in a row on said carrying vehicle.

16. A fork lift mechanism as in any of claims 1 to 15, further comprising a set of 4 extendible strut poles (25) rigidly secured to said chassis, for providing additional security against turning over of said carrying vehicle, during the process of loading and unloading.

## Patentansprüche

1. Gabelstaplermechanismus um ein getragenes Fahrzeug von beiden Seiten eines Tragefahrzeugs hochzuheben, wobei:
der Gabelstaplermechanismus für die Montage auf dem Chassis eines nicht festgelegtem Lastfahrzeugs vorgesehen ist, das reguläre Straßen befahren kann;
und wobei der Gabelstaplermechanismus besteht aus:
einem vorderen Querdorn (3a) und einem hinteren Querdorn (3b), die zurückziehbar zu beiden Seiten des Fahrzeugs ausstreckbar sind;
einem vorderen Querbalken (20a) und einem hinteren Querbalken (20b) für die starre Befestigung an dem Chassis (2);
einem vorderen (12a) und einem hinteren (12b) Mast;
Mitteln um den vorderen und den hinteren Mast (12a, 12b) jeweils entlang des vorderen und hinteren Querbalkens (20a, 20b) hin- und herzubewegen;
einem Längsträger (9) der mit dem vorderen und dem hinteren Mast (12a, 12b) verbunden ist;
Mitteln um den Längsträger (9) jeweils entlang dem vorderen und dem hinteren Mast (12a, 12b) nach oben und unten hin- und herzubewegen;
einem vorderen Stehträger (7a) und einem hinteren Stehträger (7b), die sich von dem Längsträger (9) nach unten erstrecken, wobei der vordere und der hintere Dorn (3a, 3b) mit dem Boden des vorderen und hinteren Stehträgers (7a, 7b) verbunden sind und von dort zurückziehbar zu beiden Seiten des Tragefahrzeugs ausstreckbar sind.

2. Gabelstaplermechanismus nach Anspruch 1, weiter bestehend aus gleitenden Ladebühnen (27) die zurückziehbar mit dem Chassis (2) in Eingriff stehen, um während des Transports das getragene Fahrzeug darauf zu stellen.

3. Gabelstaplermechanismus nach Anspruch 1, wobei der vordere und der hintere Dorn (3a, 3b) gespaltene oder doppelte Dorne sind, die geeignet sind, das getragene Fahrzeug an den Rädern hochzuheben.

4. Gabelstaplermechanismus nach einem der Ansprüche 1 bis 3, wobei der Längsträger (9) Mittel für die Bewegung des vorderen und des hinteren Stehträgers entlang sich selbst aufweist.

5. Gabelstaplermechanismus nach Anspruch 4, wobei die Mittel für die Längsbewegung des vorderen und des hinteren Stehträgers (7a, 7b) aus Hydraulikzylindern bestehen.

6. Gabelstaplermechanismus nach einem der Ansprüche 1 bis 5, wobei der Längsträger (9) Mittel zum Absenken und Anheben des vorderen und des hinteren Stehträgers (7a, 7b) aufweist.

7. Gabelstaplermechanismus nach einem der Ansprüche 1 bis 6, wobei das Mittel für das gleichzeitige Hin-und Herbewegen des vorderen und des hinteren Masts (12a, 12b) entlang des vorderen und des hinteren Querbalkens (20a, 20b) aus Zahnrollen (29) besteht, wobei die Zahnrollen an dem vorderen und dem hinteren Mast montiert sind und sich beide Zahnrollen gegen Zahnketten (33) drehen, die jeweils auf dem vorderen und dem hinteren Querbalken montiert sind.

8. Gabelstaplermechanismus nach Anspruch 7, wobei die Zahnrollen durch einen hydraulischen Antrieb angetrieben werden.

9. Gabelstaplermechanismus nach einem der Ansprüche 1 bis 8 mit einem Baum (13) mit dem der vordere und der hintere Mast (12a, 12b) verbunden sind.

10. Gabelstaplermechanismus nach Anspruch 9, wobei das Mittel für die Hin- und Herbewegung des Längsträgers (9) nach oben und unten aus Hydraulikzylindern (15a, 15b) besteht, die an dem Baum montiert sind, wobei die Hydraulikzylinder mit Ketten verbunden sind, die durch Laufrollen (14a, 14b) mit dem Längsträger verbunden sind.

11. Gabelstaplermechanismus nach einem der Ansprüche 1 bis 10, wobei das Mittel für das zurückziehbare Ausstrecken des vorderen und des hinteren Querdorns (3a, 3b) von dem vorderen und dem hinteren Stehträger (7a, 7b) aus aus Zahnrollen (4) besteht, die jeweils einen hydraulischen Antrieb besitzen und wobei jede Zahnrolle an jeweils dem vorderen und dem hinteren Stehträger (7a, 7b) montiert ist und sich gegen eine passende Zahnstange (6) dreht, die jeweils auf dem vorderen und dem hinteren Querdorn (3a, 3b) montiert ist.

12. Gabelstaplermechanismus für das Hochheben eines getragenen Fahrzeugs von beiden Seiten eines Tragefahrzeugs aus, wobei der Gabelstaplermechanismus für die Montage auf dem Chassis eines nicht festgelegtem Lastfahrzeugs vorgesehen ist, das reguläre Straßen befahren kann;
und wobei der Gabelstaplermechanismus besteht aus:
einem vorderen Querdorn (3a) und einem hinteren Querdorn (3b), die zurückziehbar zu beiden Seiten des Fahrzeugs ausstreckbar sind;
einem vorderen erhöhten Querbalken (20a) und einem hinteren erhöhten Querbalken (20b)die fest mit dem Chassis (2) verbindbar sind;
einem Längsträger (9), der mit dem vorderen und dem hinteren erhöhten Querbalken (20a, 20b) verbunden ist;
einem vorderen Stehträger (7a) und einem hinteren Stehträger (7b) die sich von dem Längsträger (9) nach unten erstrecken;
Mitteln, um den Längsträger (9) entlang des vorderen und des hinteren erhöhten Querbalkens (20a, 20b) hin- und herzubewegen;
Mitteln, um den vorderen und den hinteren Stehträger (7a, 7b) entlang des Längsträgers (9) hin- und herzubewegen, wobei der vordere und der hintere Querdorn (3a, 3b) mit den Böden des vorderen und des hinteren Stehträgers (7a, 7b) verbunden und von dort zu beiden Seiten des Tragefahrzeugs zurückziehbar ausfahrbar sind,
wobei der Gabelstaplermechanismus außerdem Mittel aufweist, um den vorderen und den hinteren Stehträger (7a, 7b) noch oben und unten hin- und herzubewegen.

13. Gabelstaplermechanismus nach Anspruch 12, wobei der vordere und der hintere erhöhte Querbalken (20a, 20b) mit Hebe- und Absenkmechanismen verbunden sind, um die Aufund Abbbewegung des Längsträgers (9) zu bewirken.

14. Gabelstaplermechanismus für das Hochheben einer Last von beiden Seiten eines nicht festgelegten Fahrzeugs aus, wobei der Gabelstaplermechanismus besteht aus:
einem vorderen Bogen (20a) und einem hinteren Bogen (20b) für die feste Verbindung mit dem Chassis des Tragefahrzeugs;
einem Längsträger (9) der mit dem vorderen und dem hinteren Bogen (20a, 20b) verbunden ist;
einem vorderen Querdorn (3a) und einem hinteren Querdorn (3b) der zurückziehbar mit dem Längsträger in Eingriff steht;
Mitteln, um den Längsträger (9) entlang des vorderen und des hintern Bogens (20a, 20b) zu beiden Seiten des Fahrzeugs hin anzutreiben; und
Mitteln, um den vorderen und den hinteren Querdorn (3a, 3b) in einer horizontalen Stellung zu halten;
wobei der vordere und der hintere Querdorn (3a, 3b) von dem Längsträger (9) aus zurückziehbar ausfahrbar sind; und
der hintere und der vordere Querdorn (3a, 3b) zu beiden Seiten des Tragefahrzeugs bewegbar sind, um die Last von beiden Seiten davon hochzuheben.

15. Eine Anzahl von wenigstens zwei Gabelstaplermechanismen nach einem der Ansprüche 1 bis 14 in Reihe auf dem Tragefahrzeug montiert.

16. Gabelstaplermechanismus nach einem der Ansprüche 1 bis 15, weiter einen Satz von 4 ausfahrbaren Stützstangen (25) aufweisend, die starr mit dem Chassis verbunden sind, um zusätzliche Sicherheit gegen das Umkippen des Tragefahrzeugs während des Lade- und Abladevorgangs zu bieten.

## Revendications

1. Mécanisme pour élévateur à fourche destiné à soulever un véhicule transporté d'un côté et de l'autre d'un véhicule transporteur, dans lequel :
le mécanisme pour élévateur à fourche est destiné à être installé sur un châssis (2) d'un véhicule transporteur non spécifié, approprié au trafic sur routes régulières,
le mécanisme pour élévateur à fourche comprenant :
un bras transversal antérieur (3a) et un bras transversal postérieur (3b) s'engageant en pouvant se rétracter en direction d'un côté et de l'autre du véhicule transporteur précité ;
une poutre transversale antérieure (20a) et une poutre transversale postérieure (20b) adaptées en vue d'être fixées rigidement audit châssis (2) ;
un mât antérieur (12a) et un mât postérieur (12b) ;
des moyens permettant de faire aller et venir lesdits mâts antérieur et postérieur (12a, 12b) le long desdites poutres transversales antérieure et postérieure (20a, 20b) , respectivement;
une traverse longitudinale (9) couplée auxdits mâts antérieur et postérieur (12a, 12b) ;
des moyens permettant de faire mouvoir ladite traverse longitudinale (9) dans la direction bas-haut le long desdits mâts antérieur et postérieur (12a, 12b), respectivement ;
un montant antérieur (7a) et un montant postérieur (7b) s'étendant vers le bas à partir de la traverse longitudinale (9), et dans lesquels on a couplé des bras transversaux antérieur et postérieur (3a, 3b) aux parties inférieures desdits montants antérieur et postérieur (7a, 7b), et peuvent être engagés de manière rétractable avec celles-ci, en direction d'un côté et de l'autre du véhicule transporteur précité.

2. Mécanisme pour élévateur à fourche suivant la revendication 1, comprenant en outre des plates-formes coulissantes (27) s'engageant de manière rétractable dans ledit châssis (2), en vue d'y placer le véhicule précité durant le transport

3. Mécanisme pour élévateur à fourche suivant la revendication 1, dans lequel lesdits bras transversaux antérieur et postérieur (3a, 3b) sont des bras fendus ou dédoublés adaptés en vue de soulever ledit véhicule transporté par ses roues.

4. Mécanisme pour élévateur à fourche suivant l'une des revendications 1 à 3, dans lequel la traverse longitudinale (9) précitée comprend un dispositif pour faire mouvoir longitudinalement lesdits montants antérieur et postérieur le long de celle-ci.

5. Mécanisme pour élévateur à fourche suivant la revendication 4, dans lequel le dispositif permettant de faire mouvoir les montants antérieur et postérieur (7a, 7b) comprend des pistons hydrauliques.

6. Mécanisme pour élévateur à fourche suivant l'une des revendications 1 à 5, dans lequel la traverse longitudinale (9) comprend un dispositif permettant de lever ou d'abaisser les montants antérieur et postérieur précités (7a, 7b).

7. Mécanisme pour élévateur à fourche suivant l'une des revendications 1 à 6, dans lequel les moyens permettant de faire aller et venir simultanément les mâts antérieur et postérieur (12a, 12b) le long des poutres transversales antérieure et postérieure (20a, 20b) comprennent des pignons (29), lesdits pignons étant montés sur chacun desdits mâts antérieur et postérieur, et chacun desdits pignons étant dirigé contre des chaînes à pignons (33) qui sont montées respectivement sur les poutres transversales antérieure et postérieure précitées.

8. Mécanisme pour élévateur à fourche suivant la revendication 7, dans lequel les pignons sont entraînés par une commande hydraulique (41).

9. Mécanisme pour élévateur à fourche suivant l'une des revendications 1 à 8, comprenant une membrure (13) à laquelle les mâts antérieur et postérieur (12a, 12b) sont couplés à leurs sommets.

10. Mécanisme pour élévateur à fourche suivant la revendication 9, dans lequel les moyens permettant de faire aller et venir la traverse longitudinale dans la direction bas-haut comprennent un (des) piston(s) hydraulique(s) (15a, 15b) montés sur ladite membrure, le(s) piston(s) précité(s) étant accouplés à des chaînes (14a, 14b) lesquelles sont raccordées à ladite traverse longitudinale par des poulies.

11. Mécanisme pour élévateur à fourche suivant l'une des revendications 1 à 10, dans lequel les moyens permettant d'étendre de manière rétractable lesdits bras transversaux antérieur et postérieur (3a, 3b) en partant desdits montants antérieur et postérieur (7a, 7b) comprennent des pignons (4), chacun ayant un entraînement hydraulique, chacun desdits pignons étant monté sur chacun des montants antérieur et postérieur (7a, 7b) et étant dirigé vers une crémaillère de denture conjuguée (6) laquelle est montée sur chacun desdits bras transversaux antérieur et postérieur (3a, 3b).

12. Mécanisme pour élévateur à fourche destiné à soulever un véhicule transporté d'un côté et de l'autre d'un véhicule transporteur, dans lequel :
le mécanisme pour élévateur à fourche est destiné à être installé sur un châssis (2) d'un véhicule transporteur non spécifié approprié au trafic sur des routes régulières, mécanisme comprenant :
un bras transversal antérieur (3a) et un bras transversal postérieur (3b) s'étendant de manière rétractable en direction d'un côté et de l'autre dudit véhicule transporteur ;
une poutre transversale antérieure rehaussée (20a) et une poutre transversale postérieure rehaussée (20b) adaptées pour être fixées rigidement audit châssis (2) ;
une traverse longitudinale (9) couplée auxdites poutres transversales antérieure et postérieure rehaussées (20a, 20b) ;
un montant antérieur (7a) et un montant postérieur (7b) s'étendant en direction du bas à partir de la traverse longitudinale (9) précitée ;
un dispositif permettant de faire aller et venir la traverse longitudinale (9) le long des poutres transversales antérieure et postérieure rehaussées (20a, 20b) ;
un dispositif permettant de faire aller et venir les montants antérieur et postérieur (7a, 7b) dans la direction longitudinale le long de la traverse longitudinale (9), dans lequel les bras transversaux antérieur et postérieur (3a, 3b) sont couplés aux parties inférieures des montants antérieur et postérieur précités (7a, 7b) et s'étendent de manière rétractable à partir de celles-ci, en direction d'un côté et de l'autre du véhicule transporteur,
mécanisme pour élévateur à fourche comprenant en outre un dispositif permettant de faire aller et venir les montants antérieur et postérieur (7a, 7b) précités dans la direction bas-haut.

13. Mécanisme pour élévateur à fourche suivant la revendication 12, dans lequel les poutres transversales antérieure et postérieure rehaussées (20a, 20b) sont combinées à des mécanismes de levage et d'abaissement provoquant le déplacement bas-haut de la traverse longitudinale (9).

14. Mécanisme pour élévateur à fourche destiné à soulever une charge d'un côté et de l'autre d'un véhicule transporteur non spécifié, mécanisme pour élévateur à fourche comprenant :
un arc antérieur (20a) et un arc postérieur (20b) adaptés en vue d'être fixés rigidement à un châssis (2) dudit véhicule transporteur ;
une traverse longitudinale (9) couplée auxdits arcs antérieur et postérieur (20a, 20b) ;
un bras transversal antérieur (3a) et un bras transversal postérieur (3b) s'engageant de manière rétractable avec la traverse longitudinale précitée ;
des moyens pour l'entraînement de la traverse longitudinale (9) précitée le long des arcs antérieur et postérieur (20a, 20b) ;
des moyens pour étendre les bras transversaux antérieur et postérieur (3a, 3b) à partir de la traverse longitudinale (9), en direction d'un côté et de l'autre du véhicule transporteur, et
des moyens pour retenir les bras transversaux antérieur et postérieur (3a, 3b) dans une configuration horizontale ;
mécanisme dans lequel les bras transversaux antérieur et postérieur (3a, 3b) s'étendent de manière rétractable à partir de la traverse longitudinale (9), et
les bras transversaux antérieur et postérieur (3a, 3b) sont mobiles en direction d'un côté et de l'autre du véhicule transporteur, pour soulever la charge par un côté ou l'autre de celui-ci.

15. Série d'au moins deux mécanismes pour élévateur à fourche suivant l'une des revendications 1 à 14, montés en ligne sur le véhicule transporteur précité.

16. Mécanisme pour élévateur à fourche suivant l'une des revendications 1 à 15, comprenant en outre un ensemble de 4 appuis polaires extensibles (25) rigidement fixés audit châssis, pour fournir une sécurité supplémentaire contre le renversement du véhicule transporteur lors du processus de chargement et de déchargement.
